# EUROPEAN PATENT SPECIFICATION

(11) **EP 1 094 019 B1**
(45) Date of publication and mention of the grant of the patent: **03.03.2004**
(21) Application number: 00203434.6
(22) Date of filing: 03.10.2000
(51) Int. Cl.: B65G 19/14, B65G 19/28

(54) **Tubular conveyor device**
Rohrtransporteinrichtung
Installation de convoyage tubulaire

(30) Priority: 18.10.1999 BE 9900688
(43) Date of publication of application: 25.04.2001
(73) Proprietor: Metaalconstructies Sleurs, naamloze vennootschap, 2490 Balen (BE)
(72) Inventor: Sleurs, Richard, 2490 Balen (BE)
(74) Representative: Donné, Eddy

(56) References cited:
- DE-A- 3 502 985
- DE-A- 19 547 689
- FR-A- 1 459 708
- US-A- 3 266 619
- PATENT ABSTRACTS OF JAPAN vol. 013, no. 577 (M-910), 20 December 1989 (1989-12-20) & JP 01 242308 A (TOKYU CONSTR CO LTD;OTHERS: 01), 27 September 1989 (1989-09-27)

## Description

This invention relates to a tubular conveyor device for conveying bulk material according to the preamble of claim 1.

Such tubular conveyor devices are used for conveying broken glass, quartz, blasting grit, sand, cement, fly ash, or other powdered or granular material, in particular for abrasive material with grain sizes up to, for example, 40 mm.

Substantially, such devices have an oblong closed track which is formed by several round pipes which, at one extremity, are connected to each other by means of a box with a driven chain wheel and, on the other extremity, by means of a box with a second chain wheel for tensioning the chain and possibly in between by curve elements in which the chain is bent.

In such known conveyor devices, the pipes, and therefore the carrier plates, too, are round.

In consideration of the fact that the carrier plates must be able to be moved through the round pipes, their exterior diameter is just somewhat smaller than the interior diameter of the pipes.

Where the round carrier plates touch a pipe wall, they contact this pipe wall only at one point. At this point, a relatively large wear and tear will occur.

Moreover, in a round pipe, the chain may swing to and fro about its longitudinal direction, which is aggravated by material which gets in between the edge of a carrier plate and the wall of the pipe. This increases the wear and tear of the carrier plate, but due to the to-and-fro turning movement of the chain link at which the carrier plate is provided, in respect to an adjacent chain link, also the chain will be strongly subjected to wear and tear.

The chain may be subjected to a torsion, as a result of which a worn-down edge of a carrier plate will become situated at another location than usual, which may cause problems when this carrier plate has to penetrate from a box into a pipe. Therefore, the round pipe is connected to this box with funnel-shaped entry parts, as a result of which the box also has to be wider than the pipe itself. Therefore, the boxes take up more space and are more expensive.

The invention aims at a tubular conveyor device which does not show the aforementioned and other disadvantages and is subjected to less wear and tear than the known devices.

According to the invention, this aim is achieved by a tubular conveyor device with the features of the characterizing part of claim 1.

DE-A-195.47.689 discloses a tubular conveyor with pipes having a rectangular section.

Also JP-A-01.242308 relates to a tubular conveyor having a throw-in hopper and a discharging hopper and inbetween a pipe having a rectangular or a long oval shape.

FR 1 459 708 A discloses a tubular conveyor device with the features of the preamble of claim 1.

As the carrier plates,are subjected the most to wear and tear, according to the invention they are exchangeable, whereby they consist of at least two parts which are attached to the chain by means of a support plate to which they are attached in a detachable manner.

This support plate, too, is exchangeable and, therefore, attached to the chain in a detachable manner, in that it consists of two parts which are attached to each other and thus clamped to the chain.

In known tubular conveyor devices with support plates, these latter are welded to the chain.

By this welding, not only the support plates can not be replaced, but the chain link, onto which a support plate is welded, can become locally un-hardened and, therefore, lose part of its strength and hardness.

The tubular conveyor device may comprise a curve element in between at least two of the pipes.

Especially in a curve where material is conveyed, the friction of the carrier plates over the inner side of the curve can be high.

In order to avoid such friction, a curve wheel is provided in the curve element, at the inner side of the curve.

With the intention of better showing the characteristics of the invention, hereafter, as an example without any limitative character, a preferred form of embodiment of a tubular conveyor device according to the invention is described, with reference to the accompanying drawings, wherein:
figure 1 schematically represents a lateral view of a tubular conveyor device according to the invention;
figure 2, at a larger scale, represents the part which is indicated by arrow F2 in figure 1, with a cut-off portion;
figure 3 represents an exploded view of a part of the chain with a carrier plate and a support plate of the device from figures 1 and 2;
figure 4 represents a view according to arrow F4 in figure 1, at a larger scale and with a cut-off portion;
figure 5, at a larger scale, represents a view according to arrow F5 in figure 1, with a cut-off portion.

The tubular conveyor device represented in the figures for conveying powdered and granular material consists of an oblong track 1 comprising pipes 2 to 9 with a square cross-section, an endless chain 10 extending through the track 1 and reversing at the extremities of this track 1 over two chain wheels 11 and 12, carrier plates 13 which, by the intermediary of support plates 14, are attached exchangeably to the chain 10, and a motor 15 which, by the intermediary of a flange reduction box 16, drives the chain wheel 12.

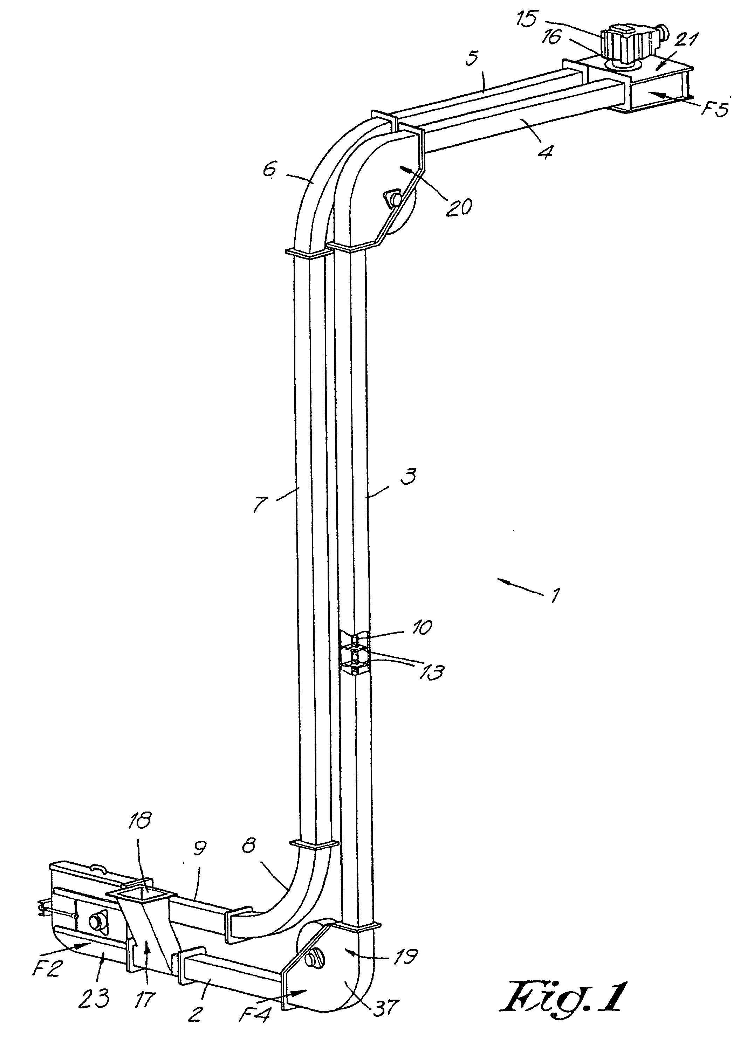

As represented in figure 1, the track 1 successively comprises a filling station 17 having a filling opening 18 at the top, the horizontal pipe 2, a curve element 19 which is bent over 90°, the vertical pipe 3, a second curve element 20 which is also bent over 90°, the horizontal pipe 4, and a box 21 in which the second chain wheel 12 is beared with its shaft disposed vertically.

This flat-lying box 21 is open at the underside, such that it simultaneously forms a discharge station. At the inside, it may have the same height as the pipe 4.

Of course, in a variant the discharge station may be separated from the box 21 and, for example, be situated in the pipe 4. The box 21 then may be the last discharge station.

The aforementioned parts of the track 1 form the actual conveying part where material 22 is conveyed from the filling station 17 to the discharge station formed by the box 21. On top of this latter, the motor 15 is mounted by the intermediary of the flange reduction box 16.

As the box 21 is rather narrow, or, more particularly, as the side on which the flange reduction box 16 is provided, is situated next to the chain wheel 12, the outgoing shaft of the flange reduction box 16 can drive the chain wheel 12 directly, without intermediary shafts and without the necessity of additional bearings.

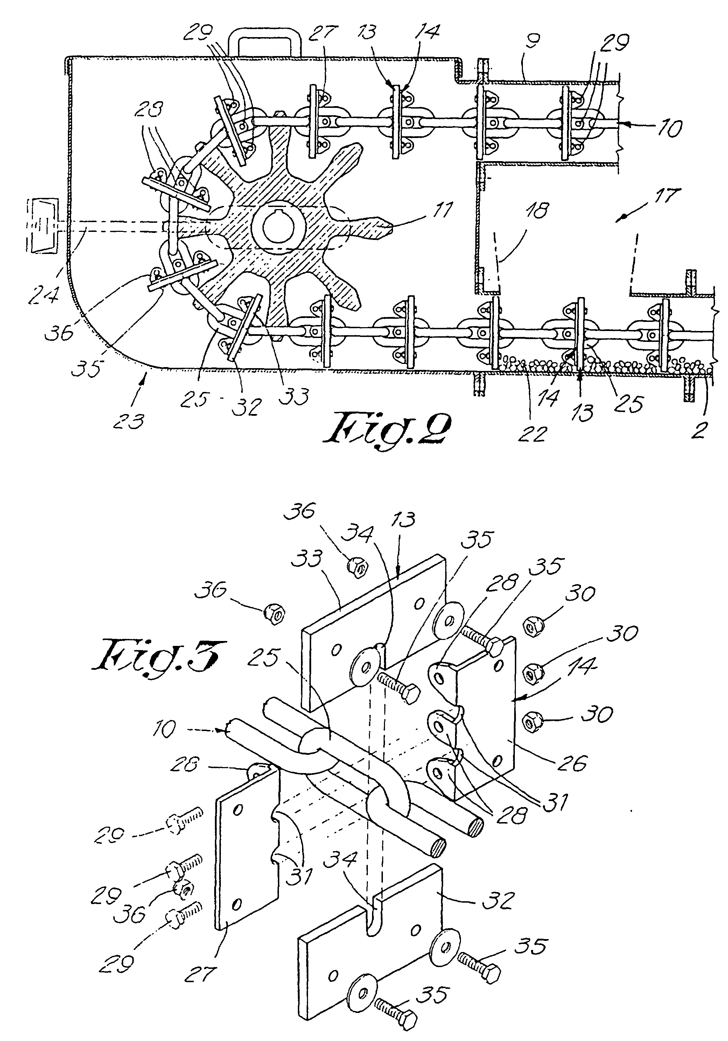

The return part of the track 1 by which the chain 10 returns, consists of the horizontal pipe 5 which is parallel to the pipe 4, the pipe 6 bent over 90°, the vertical pipe 7, the pipe 8 bent over 90°, the horizontal pipe 9 and a box 23 in which the chain wheel 11 is beared with its axis horizontally in a bearing which can be adjusted in height as well as horizontally in respect to the box 23, as represented in figure 2.

By means of a tie rod 24 connected to a not-represented weight or a spring, this bearing can be drawn away, such that the chain 10 is tensioned.

The box 23, as well as the lowermost part of the filling station 17, has the same width at its interior as the pipe 2, and its lower wall is situated in the prolongation of the underside of the pipe 2.

Around each of the links of the chain, a support plate 14 and a carrier plate 13 attached thereupon are provided.

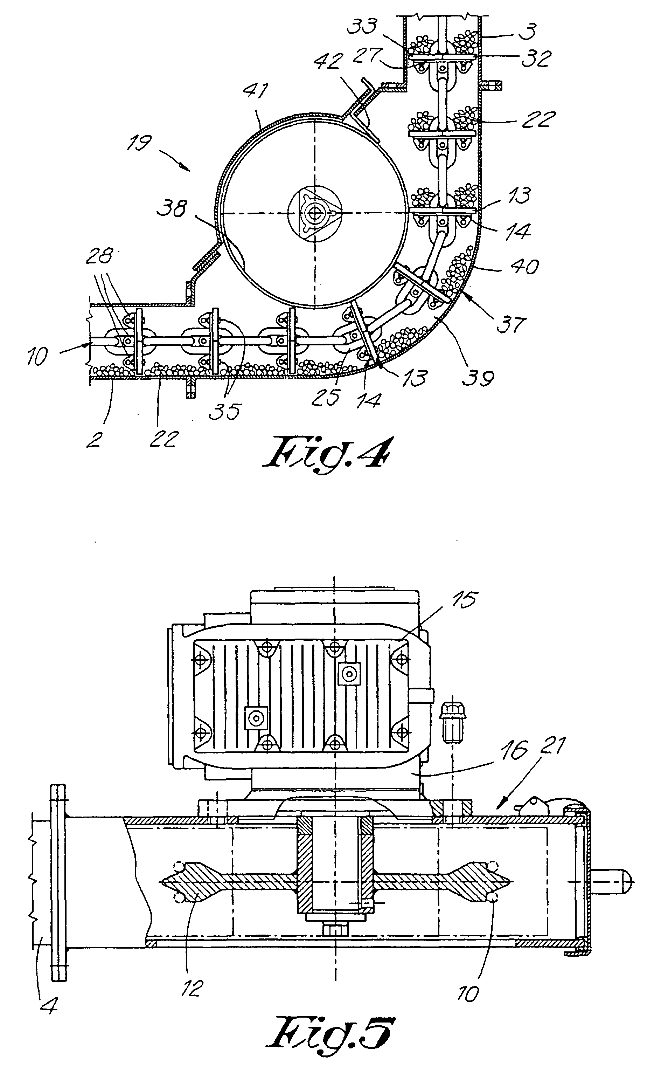

As in detail represented in figure 3, a support plate 14 is fixedly clamped to a link 25 and the support plate 14 to this aim consists of two halves 26 and 27 which each have three upstanding eyelets 28 at a longitudinal edge. With these eyelets 28, the two halves 26 and 27 are fixed detachably to each other, by means of bolts 29 and nuts 30.

Between the eyelets 28, in the longitudinal edge of each half 26 or 27, an almost semicircular recess 31 is provided for a longitudinal leg of the link 25, with such a depth that, when the eyelets 28 of the halves 26 and 27 are practically resting against each other, these halves 26 and 27 are sitting fixedly clamped on the link 25.

Each carrier plate 13 also consists of two halves 32 and 33 which, however, do not have any eyelets, but, however, in the middle of a longitudinal edge a groove 34 with a semicircular extremity, with the same radius as the radius of a longitudinal leg of the link 25.

With their longitudinal direction perpendicular in respect to the longitudinal direction of the halves 26 and 27 of a support disk 14, these halves 32 and 33 are fixed detachably to this latter by means of bolts 35 and nuts 36. Hereby, they are slid with their grooves 34 over the longitudinal legs of the link 25 until they adjoin with their longitudinal edges against each other.

The two halves 32 and 33 of the carrier disk 13 form a square which is somewhat larger than the surface of the support disk 14 and which has sides which, with the exception of a small play, are equal to the inner dimensions of a pipe 2 to 9.

In the return portion, the chain 10 is suspended loosely, such that the friction of the carrier disks 13 against the walls, even in the curves, is not large and the curve elements can be formed by bent pipes 6 and 8.

In the other portion, however, the chain 10 is under tension and the carrier disks 13 which carry along the material 22 will cause a strong friction at the inner side of the curves.

In order to avoid this, the curve elements 19 and 20 are provided between the horizontal pipe 2 and the vertical pipe 3 and between this latter and the horizontal pipe 4, which curve elements, as represented in detail in figure 4, consist of a box 37 in which a curve wheel 38 is beared.

The box 37 has two lateral walls 39 which are situated at a distance from each other which corresponds to the width of the pipes 2-9, an outer wall 40 with a portion which is bent according to a circular curve, at the outer side of the curve, and a removable wall 41 which covers the curve wheel 38 at the inner side of the curve.

This curve wheel 38 is directed with its axis perpendicular to the lateral walls and is situated at the inner side of the curve, opposite to the bent portion of the outer wall 40.

If necessary, this last portion or the entire outer wall 40 can be made especially wear and tear resistant or can be exchangeable.

The curve wheel 38 is situated with a concentric portion at a distance from this bent portion of the outer wall 40 which is equal to the width of the pipes 2-9.

The curve wheel 38 itself is not driven, but revolved by the moving carrier disks 13.

In the box 37, at the side situated downstream, a scraper 42 is installed which scrapes the curve wheel 38 in order to prevent that material will stick to this curve wheel 38. In the case that, indeed, material should get to that side of the curve wheel 38 which is turned away from the chain 10, such material is held back by the wall 41 and guided back towards the chain 10.

During operation, the chain 10 is driven by means of the chain wheel 12 by the motor 15. Bulk material is brought into the filling station 17 through the filling opening 18 and carried along by the carrier disks 13 up to the discharge station formed by the box 21, where this material drops downward, for example, into a silo.

Due to the square shape of these carrier disks 13, they can not turn in respect to the pipes 2-9, nor can the chain 10 undergo any torsion nor can it twist. Entry parts on the pipes 2-9 are not necessary.

Although the wear and tear of these carrier disks 13 is relatively limited due to their shape and due to the presence of the curve wheels 38, they can easily be exchanged, if necessary.

These carrier disks 13 can be manufactured of especially wear and tear resistant material, such as special synthetic material alloys. The support disks 14, too, are exchangeable, if necessary.

The entire tubular conveyor device is dustproof.

The shape of the track 1 has been given as an example only and is only one of many possibilities.

It is obvious that other tracks 1, with more or less curve elements, curve elements over other angles than 90°, more than one filling station, more than one discharge station, pipes directed otherwise, and so on, are possible.

So, for example, the pipes 4 and 5 do not have to be connected to the box 21 next to each other. They can also be connected to this latter one on top of the other.

The invention is in no way limited to the form of embodiment described heretofore and represented in the figures, on the contrary may such tubular conveyor device be realized in different variants without leaving the scope of the invention as defined in the appended claims.

## Claims

1. Tubular conveyor device for conveying bulk material, comprising one or more pipes (2-9), an endless chain (10) which extends through the pipes (2-9) and which is guided by chain wheels (1,12) and whereupon carrier plates (13) are attached for carrying along the bulk material (22), and means (15-16) for driving at least one of the chain wheels (12) whereby the carrier plates (13) are exchangeable and consist of at least two parts (32,33) which are attached to the chain (10) by means of a support plate (14) on which they are mounted in a detachable manner, and whereby the support plate (14) is exchangeable and, therefore, is attached to the chain (10) in a detachable manner, **characterized in that** the support plate (14) consists of two parts, in particular two halves (26,27) which are attached to each other and thus clamped to the chain (10), and when the halves (26,27) of the support plate (14), at a longitudinal edge, are provided with eyelets (28) and these halves (26,27) are attached to each other in a detachable manner by means of these eyelets (28).

2. Tubular conveyor device according to claim 1, **characterized in that** the pipes (2-5) have a square cross - section and, therefore, also the carrier plates (13) substantially are square.

3. Tubular conveyor device according to claims 1 or 2, **characterized in that** the carrier plate (13) as well as the support plate (14) consist of two halves (32,33; 26,27), whereby the halves (32,33) of the carrier plate (13) are directed with their longitudinal direction perpendicular to the longitudinal direction of the halves (26,27) of the support plate (14).

4. Tubular conveyor device according to any of the claims 1 or 3, **characterized in that** the carrier plate (13) is somewhat larger than the support plate (14).

5. Tubular conveyor device according to any of the preceding claims, **characterized in that** it comprises a curve element (19;20) in between at least two of the pipes (2 and 3; 4 and 5) and that at least at the inner side of the curve, a curve wheel (38) is provided in this curve element (19;20).

6. Tubular conveyor device according to claim 5, **characterized in that** the curve element (19;20), at the outer side of the curve, at least over a certain part forms a circular curve which is concentric to the opposite portion of the curve wheel (38) which is situated at a distance which is approximately equal to the width of a carrier plate (13) situated in between them, seen in radial direction of the curve wheel (38).

7. Tubular conveyor device according to any of the preceding claims, **characterized in that** the means for driving at least one of the chain wheels (11,12) comprises a motor (15) which, by means of a flange reduction gear (16), is driving a chain wheel (12), whereby the outgoing shaft of this flange reduction gear (16) is coupled directly to the chain wheel (12).

## Patentansprüche

1. Rohrtransporteinrichtung zum Befördern von Schüttgut, welche ein oder mehrere Rohre (2-9), eine Endloskette (10) die sich durch die Rohre (2-9) erstreckt und die durch Kettenräder (1,12) geführt ist und auf welcher Trägerplatten zum Weitertransportieren des Schüttguts (22) befestigt sind, und Mittel (15-16) zum Antreiben von mindestens einem der Kettenräder (12) umfasst, wobei die Trägerplatten (13) auswechselbar sind und aus mindestens zwei Teilen (32,33) bestehen, die an der Kette (10) mittels einer Stützplatte (14) befestigt sind, an der sie in abnehmbarer Weise montiert sind, und wobei die Stützplatte (14) auswechselbar ist und daher an der Kette (10) in einer abnehmbaren Weise befestigt ist, **dadurch gekennzeichnet, dass** die Stützplatte (14) aus zwei Teilen besteht, insbesondere zwei Hälften (26,27), die aneinander befestigt und daher an der Kette (10) festgeklemmt sind, und wo die Hälften (26,27) der Stützplatte (14) an einer Längskante mit Ösen (28) versehen sind und diese Hälften (26,27) in abnehmbarer Weise mittels dieser Ösen (28) befestigt sind.

2. Rohrtransporteinrichtung nach Anspruch 1, **dadurch gekennzeichnet, dass** die Rohre (2-5) einen quadratischen Querschnitt haben und daher auch die Trägerplatten (13) im Wesentlichen quadratisch sind.

3. Rohrtransporteinrichtung nach Anspruch 1 oder 2, **dadurch gekennzeichnet, dass** die Trägerplatte (13) sowie die Stützplatte (14) aus zwei Hälften (32,33;26,27) bestehen, wobei die Hälften (32,33) der Trägerplatte (13) mit ihrer Längsrichtung senkrecht zur Längsrichtung der Hälften (26,27) der Stützplatte (14) ausgerichtet sind.

4. Rohrtransporteinrichtung nach einem der Ansprüche 1 oder 3, **dadurch gekennzeichnet, dass** die Trägerplatte (13) ein wenig größer ist als die Stützplatte (14).

5. Rohrtransporteinrichtung nach einem der vorhergehenden Ansprüche,
**dadurch gekennzeichnet, dass** sie ein gekrümmtes Element (19;20) zwischen mindestens zwei der Rohre (2 und 3; 4 und 5) umfasst und dass mindestens an der Innenseite der Krümmung ein Krümmungsrad (38) in diesem gekrümmten Element (19;20) bereit gestellt ist.

6. Rohrtransporteinrichtung nach Anspruch 5, **dadurch gekennzeichnet, dass** das gekrümmte Element (19;20) an der Außenseite der Krümmung mindestens über einen bestimmten Teil eine kreisförmige Krümmung bildet, die konzentrisch zum gegenüber liegenden Abschnitt des Krümmungsrades (38) ist, das sich in einem Abstand befindet, der ungefähr gleich der Breite einer zwischen ihnen liegenden Trägerplatte (13) ist, gesehen in radialer Richtung des Krümmungsrades (38).

7. Rohrtransporteinrichtung nach einem der vorhergehenden Ansprüche, **dadurch gekennzeichnet, dass** die Mittel zum Antreiben von mindestens einem der Kettenräder (11,12) einen Motor (15) umfassen, der mittels eines Flanschuntersetzungsgetriebes (16) ein Kettenrad (12) antreibt, wobei die ausgehende Welle dieses Flanschuntersetzungsgetriebes (16) direkt an das Kettenrad (12) gekoppelt ist.

## Revendications

1. Dispositif de transport tubulaire pour transporter une matière en vrac, comprenant un ou plusieurs tuyaux (2 - 9), une chaîne sans fin (10) qui s'étend à travers les tuyaux (2 - 9), qui est guidée par des roues de chaînes (1, 12) et sur laquelle sont fixées des plaques de transport (13) pour transporter la matière en vrac (22), ainsi que des moyens (15 - 16) pour entraîner au moins une des roues de chaînes (12), les plaques de transport (13) pouvant être échangées et étant constituées par au moins deux parties (32, 33) qui sont fixées à la chaîne (10) au moyen d'une plaque de support (14) sur laquelle elles sont montées de manière amovible, la plaque de support (14) pouvant être échangée et étant par conséquent fixée à la chaîne (10) d'une manière amovible, **caractérisé en ce que** la plaque de support (14) est constituée par deux parties, en particulier deux moitiés (26, 27) qui sont fixées l'une à l'autre et ainsi serrées à la chaîne (10), lés moitiés (26, 27) de la plaque de support (14), à un bord longitudinal, étant munies d'oeillets (28), ces deux moitiés (26, 27) étant fixées l'une à l'autre de manière amovible à l'aide de ces oeillets (28).

2. Dispositif de transport tubulaire selon la revendication 1, **caractérisé en ce que** les tuyaux (2 - 5) possèdent une section transversale carrée, si bien que les plaques de transport (13) sont également essentiellement carrées.

3. Dispositif de transport tubulaire selon la revendication 1 ou 2, **caractérisé en ce que** la plaque de transport (13) ainsi que la plaque de support (14) sont constituées par deux moitiés (32, 33 ; 26, 27), les moitiés (32, 33) de la plaque de transport (13) étant orientées, avec leur direction longitudinale, perpendiculairement à la direction longitudinale des moitiés (26, 27) de la plaque de support (14).

4. Dispositif de transport tubulaire selon l'une quelconque des revendications 1 à 3, **caractérisé en ce que** la plaque de transport (13) est légèrement plus grande que la plaque de support (14).

5. Dispositif de transport tubulaire selon l'une quelconque des revendications précédentes, **caractérisé en ce qu'**il comprend un élément courbe (19 ; 20) entre au moins deux des tuyaux (2 et 3 ; 4 et 5), et **en ce qu'**au moins sur le côté interne de la courbe, on prévoit une roue courbe (38) dans cet élément courbe (19 ; 20).

6. Dispositif de transport tubulaire selon la revendication 5, **caractérisé en ce que** l'élément courbe (19 ; 20), sur le côté externe de la courbe, au moins sur une certaine partie, forme une courbe circulaire qui est concentrique par rapport à la portion opposée de la roue courbe (38) qui est située à une distance qui est approximativement égale à la largeur d'une plaque de transport (13) située en position intermédiaire, lorsqu'on regarde dans la direction radiale de la roue courbe (38).

7. Dispositif de transport tubulaire selon l'une quelconque des revendications précédentes, **caractérisé en ce que** le moyen pour entraîner au moins une des roues de chaînes (11, 12), comprend un moteur (15) qui, à l'aide d'un engrenage réducteur à bride (16) entraîne une roue de chaîne (12), l'arbre de sortie de cet engrenage réducteur à bride (16) étant couplé directement à la roue de chaîne (12).
